# EUROPÄISCHE PATENTANMELDUNG

(11) **EP 4 793 929 A1**
(43) Veröffentlichungstag der Anmeldung: **19.08.2026**
(21) Anmeldenummer: 25158691.3
(22) Anmeldetag: 18.02.2025
(51) Int. Cl.: G09F 13/04, G08B 7/06, G09F 13/10, G09F 13/18, G09F 27/00

(54) **ANLAGE UND NOT- UND/ODER SICHERHEITSLEUCHTE HIERFÜR**

(71) Anmelder: din-Dietmar Nocker Facilitymanagement GmbH & Co KG, 4030 Linz (AT)
(72) Erfinder:
(74) Vertreter: Jell, Friedrich

(57) **Zusammenfassung**

Es wird eine Anlage, insbesondere Not- und/oder Sicherheitsbeleuchtungsanlage, und eine Not- und/oder Sicherheitsleuchte (1) hierfür gezeigt. Um die Not- und/oder Sicherheitsleuchte (1) flexibel verwenden zu können, wird vorgeschlagen, dass die Not- und/oder Sicherheitsleuchte (1) eine, insbesondere u-förmige, Klammer (10) mit einem die Linse (7) aufweisenden Klammersteg (11) und mit zumindest zwei an diesen Klammersteg (11) anschließenden und gleichsinnig ausgerichteten Klammerschenkeln (12a, 12b) aufweist, die zwischen sich zumindest die lichtleitende Platte (3) auf deren Breitseiten (3b, 3c) klemmend aufnehmen.

## Beschreibung

Die Erfindung betrifft eine Anlage, insbesondere Not- und/oder Sicherheitsbeleuchtungsanlage, und eine Not- und/oder Sicherheitsleuchte mit einer lichtleitenden Platte, die zwei einander gegenüberliegende Breitseiten und zumindest eine zwischen den Breitseiten vorgesehene, insbesondere untere, Schmalseite aufweist, und mit einer an der zumindest einen Schmalseite der lichtleitenden Platte angeordneten Linse zum Einstellen einer Abstrahlcharakteristik der Not- und/oder Sicherheitsleuchte zur Umgebungsbeleuchtung mit einem aus der Schmalseite austretenden Licht.

Not- und/oder Sicherheitsleuchten, die an der unteren Schmalseite einer lichtleitenden Platte eine Linse zur Umgebungsbeleuchtung aufweisen, sind aus dem Stand der Technik bekannt. Ein Nachteil dieser Konstruktion liegt jedoch im hohen Aufwand, der für die Montage und Anpassung der Linse erforderlich ist, um die meist individuellen Anforderungen der Umgebungsbeleuchtung an unterschiedlichen Aufstellungsorten zu erfüllen. Die dafür notwendige Justierung der Linse gestaltet sich komplex und zeitintensiv. Folglich sind die bekannten Not- und/oder Sicherheitsleuchten sowohl in ihrer Flexibilität als auch in ihrer praktischen Handhabung eingeschränkt, was ihre Einsatzmöglichkeiten deutlich limitiert und den Montageprozess unnötig aufwendig macht.

Die Erfindung hat sich daher ausgehend vom eingangs geschilderten Stand der Technik die Aufgabe gestellt, eine Not- und/oder Sicherheitsleuchte zu schaffen, die eine einfache und flexible Anpassung der Umgebungsbeleuchtung ermöglicht. Zudem soll diese Not- und/oder Sicherheitsleuchte konstruktiv einfach ausgebildet sein.

Die Erfindung löst die gestellte Aufgabe durch die Merkmale des Anspruchs 1.

Um eine modular an eine Not- und/oder Sicherheitsleuchte anbringbare sowie flexibel in der Abstrahlcharakteristik anpassbare Umgebungsbeleuchtung zu ermöglichen, weist die Not- und/oder Sicherheitsleuchte eine Klammer mit einem die Linse aufweisenden Klammersteg und mit zumindest zwei an diesen Klammersteg anschließenden und gleichsinnig ausgerichteten Klammerschenkeln auf, die zwischen einander zumindest die lichtleitende Platte auf deren Breitseiten klemmend aufnehmen.

So ermöglicht diese Klammer eine präzise Positionierung der Linse zur Schmalseite der lichtleitenden Platte, was zu einer verbesserten Lichtlenkung und -verteilung zur Umgebungsbeleuchtung führt.

Außerdem kann durch die flexible Konstruktion der klemmenden Befestigung der Linse an der lichtleitenden Platte jene für die Umgebung passende Linse handhabungsfreundlich an der Not- und/oder Sicherheitsleuchte vorgesehen werden. Damit kann entsprechend den Anforderungen zwischen einer gleichmäßigen oder fokussierten Ausleuchtung von Flächen gewählt werden, wodurch die Not- und/oder Sicherheitsleuchte besonders flexibel einsetz- und anpassbar ist.

Vorzugsweise ist die Linse eine TIR-Linse. Solch eine TIR-Linse (Total-Internal-Reflection-Linse) ermöglicht es beispielsweise, das Licht noch effizienter und gezielter zu lenken, um damit eine erhöhte Lichtausbeute bei minimalen Verlusten zu erreichen. Damit kann eine effizientere und zuverlässigere Beleuchtung, selbst in schwierigen Umgebungen, sichergestellt werden.

Daher kann die erfindungsgemäße Not- und/oder Sicherheitsleuchte gegenüber dem Stand der Technik eine verbessert anpassbare Umgebungsbeleuchtung bei gleichzeitig einfachen Montage- und Wartungsarbeiten ermöglichen - dies auch bei konstruktiver Einfachheit durch Verwendung einer Klammer mit der Linse.

Eine homogenere Beleuchtung kann beispielsweise erreicht werden, wenn eine Lichtintensitätsverteilung des von der Linse abgegebenen Lichts, insbesondere in der C0/C180-Ebene, zumindest eine Lichtkeule aufweist, deren Keulenspitze bei einem Winkel größer als 0 Grad liegt. Vorzugsweise kann dieser Winkel im Bereich von 45 bis 75 Grad liegen, um damit eine vergleichsweise breite, dennoch aber homogene Abstrahlcharakteristik zu ermöglichen.

Vorzugsweise kann sich die Not- und/oder Sicherheitsleuchte zur Fluchtwegs-Beleuchtung besonders eignen, wenn die eine, insbesondere symmetrische, Batwing-Form aufweisende Lichtintensitätsverteilung, insbesondere in der C0/C180-Ebene, auf jeder Halbseite zumindest eine Lichtkeule der zumindest einen Lichtkeule aufweist.

Vorstehendes kann weiter verbessert werden, wenn die Lichtintensitätsverteilung, insbesondere in der C0/C180-Ebene, zwischen den zwei Lichtkeulen einen Zwischenbereich mit einer im Vergleich zu den Lichtkeulen niedrigeren Lichtintensität zur Homogenisierung der Lichtintensitätsverteilung aufweist.

Auch ist denkbar, dass die Linse eine plane und der Schmalseite zugewandte Lichteintrittsfläche aufweist. Damit kann nicht nur eine einfachere und kostengünstigere Herstellung, sondern es kann damit auch eine gleichmäßigere Lichtverteilung samt reduzierten Verzerrungen ermöglicht werden, was die optische Effizienz der Linse zur Umgebungsbeleuchtung verbessert.

Beispielsweise weist die Linse eine W-förmig oder N-förmig verlaufende Lichtaustrittsfläche auf, was eine homogenere Lichtverteilung ermöglichen kann, indem Hotspots reduziert und die Lichtintensität gleichmäßiger über die Fläche verteilt wird. Zudem optimiert diese spezifische Formgebung die Lichtausbeute, indem Verluste und Streulicht minimiert werden.

Des Weiteren ist vorstellbar, dass die Linse einen an ihren inneren und/oder äußeren Mantelflächen zumindest abschnittsweise wenigstens einen totalreflektierenden Flächenabschnitt aufweist, um so Licht effizienter zur Lichtaustrittsfläche zu lenken. Durch diese Totalreflexion wird das Licht effizient innerhalb der Linse geführt und gezielter zur Lichtaustrittsfläche gelenkt, wodurch Verluste minimiert und die Lichtausbeute maximiert werden. Mit einer höheren Lichtausbeute und -effizienz ist sohin zu rechnen, was eine optimale Beleuchtung ermöglichen und damit die Not- und/oder Sicherheitsleuchte noch flexibler und zuverlässiger machen kann.

Vorstellbar ist, dass die Not- und/oder Sicherheitsleuchte zumindest auf einer Breitseite der Breitseiten der lichtleitenden Platte eine Anzeige, insbesondere Piktogramm, aufweist, um damit die Anzeige zu hinterleuchten. Dies erhöht nicht nur die Sichtbarkeit der Anzeige, sondern erweitert auch die Funktionalität der Not- und/oder Sicherheitsleuchte.

Die Funktionalität der Klammer kann erweitert werden, wenn ein Klammerschenkel der zumindest zwei Klammerschenkel über die Anzeige an der Breitseite vorragt und an diese Breitseite der lichtleitenden Platte klemmt. Dies ermöglicht es, nämlich die Anzeige sicher an der Platte zu halten. Insbesondere wenn es sich um ein Piktogramm handelt, kann die Klammer ein randseitiges Abheben des Piktogramms von der Breitseite verhindern, was die Erkennbarkeit des Piktogramms sicherstellt und damit die Standfestigkeit der Not- und/oder Sicherheitsleuchte erhöht. Die Klammer dient daher nicht nur dazu, die Umgebungsbeleuchtung zu verbessern, sondern auch dazu, die Anzeige sicher an der lichtleitenden Platte zu halten.

Die Konstruktion kann weiter vereinfacht werden, wenn der Klammersteg die Linse ausbildet.

Vorzugsweise verlaufen die Klammerschenkel im Querschnitt zumindest abschnittsweise, insbesondere an ihrer Innenseite, konvex und/oder gerade verlaufen. Mit diesen Verläufen kann eine optimale Klemmung an der lichtleitenden Platte ermöglicht und insbesondere auch ein Abziehrisiko weiter minimiert werden - dies erhöht die Standfestigkeit der Not- und/oder Sicherheitsleuchte weiter.

Beispielsweise kann die Konstruktion weiter vereinfacht werden, wenn die sich gegenüberliegenden Klammerschenkel im Querschnitt spiegelsymmetrisch verlaufen. Auch kann dies die Handhabung der Klemme erleichtern, da die Klammer aufgrund ihrer Symmetrie leichter zu montieren und zu justieren ist.

Ist die Klammer im Wesentlichen lichtdurchlässig, kann eine Sichtbeeinträchtigung auf die Not- und/oder Sicherheitsleuchte minimiert werden. Dies insbesondere dann, wenn die Klammer im Wesentlichen transparent ist. Zudem kann gegebenenfalls seitlich zur Schmalseite austretendes Licht zur Linse geführt werden und so zur Umgebungsbeleuchtung zusätzlich beitragen. Damit kann die Intensität zur Umgebungsbeleuchtung der Not- und/oder Sicherheitsleuchte weiter erhöht werden.

Die Herstellung der Klammer kann beispielsweise weiter erleichtert werden, wenn die Klammer aus einem Kunststoffmaterial besteht. Die Klammer kann hierzu auch einstückig ausgebildet sein.

Vorzugsweise weist die Klammer eine Längsprofilform auf. Vorstellbar ist zudem, dass die Klammer aus einem Längsprofil besteht.

Verschmutzungen zwischen lichtleitender Platte und Klammer können vermieden werden, wenn die Not- und/oder Sicherheitsleuchte Endkappen aufweist, die jeweils an einem der stirnseitigen Enden der Klammer vorgesehen sind, kann gegebenenfalls ein Spalt zwischen Klammer und Schmalseite verschlossen werden. Damit kann auch Schmutz und/oder Staub nicht die Lichtleistung zur Umgebungsbeleuchtung beeinträchtigen, was die Standfestigkeit der Not- und/oder Sicherheitsleuchte weiter erhöht. Zudem ermöglicht der Einsatz von Endkappen eine profilartige Ausbildung der Klammer, was deren konstruktiven Anforderungen weiter reduzieren und damit auch deren Herstellung erleichtern kann.

Beispielsweise sind die Endkappen mit der Klammer fest verbunden, um deren Position zu fixieren. Dies kann beispielsweise eine stoffschlüssig und/oder kraftschlüssig und/oder formschlüssige Verbindung sein. Auch kann die feste Verbindung lösbar ausgebildet sein. Auch ist vorstellbar, dass die Endkappen in der jeweiligen Klammer verrastend eingreifen. Dies beispielsweise, indem die jeweilige Endkappe in einen Hinterschnitt an der lichtleitenden Platte verrastend eingreift.

Die Klammer kann in der Funktionalität weiter erhöht werden, wenn die Klammer an einem Klammerschenkel zumindest eine Haltenase aufweist. Die Haltenase kann beispielsweise zur Montage eines Sensors dienen, was eine einfache Befestigungsmöglichkeit an der Not- und/oder Sicherheitsleuchte bieten kann.

Vorzugsweise eignet sich die erfindungsgemäße Not- und/oder Sicherheitsleuchte für eine Anlage, insbesondere Not- und/oder Sicherheitsbeleuchtungsanlage.

In den Figuren ist beispielsweise der Erfindungsgegenstand anhand mehrerer Ausführungsbeispiele näher dargestellt. Es zeigen
- Fig. 1: eine Frontansicht auf eine Not- und/oder Sicherheitsleuchte,
- Fig. 2: eine teilweise abgerissene und vergrößerte Schnittansicht der Fig. 1,
- Fig. 3: eine Abstrahlcharakteristik einer Umgebungsbeleuchtung der nach Fig. 1 und 2 dargestellten Not- und/oder Sicherheitsleuchte und
- Fig. 4: jene nach den Figuren 1 und 2 dargestellte Klammer mit einer anders ausgebildeten Linse.

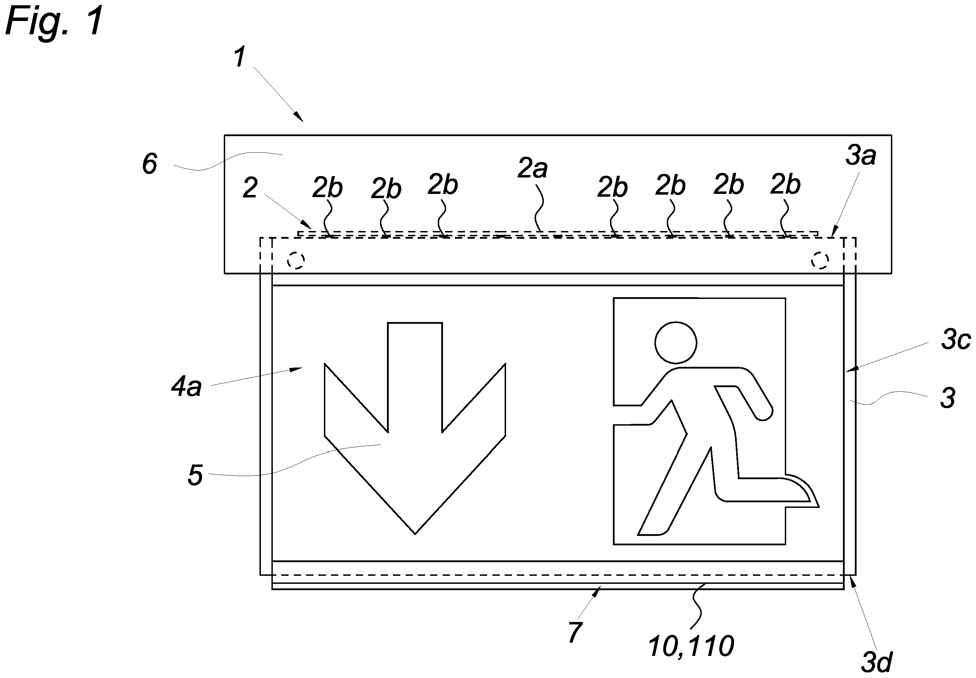

Nach Fig. 1 ist eine Notleuchte und als Rettungszeichenleuchte ausgebildete Sicherheitsleuchte 1 dargestellt. Diese Not- und Sicherheitsleuchte 1 ist Teil einer nicht dargestellten Not- und/oder Sicherheitsbeleuchtungsanlage als Beispiel einer Anlage eines Gebäudes.

Die Not- und Sicherheitsleuchte 1 weist ein Leuchtmittel 2 auf, das beispielsweise aus mehreren nacheinander auf einer Platine 2a angeordneten LED 2b besteht. Das Leuchtmittel 2 ist mit der lichtleitenden Platte 3 der Not- und Sicherheitsleuchte 1 zur Licht-Einkopplung optisch verbunden. Beispielsweise ist -wie dargestellt- das Leuchtmittel 2 an der Fläche der oberen Schmalseite 3a einer lichtleitenden Platte 3 vorgesehen. Damit kann diese lichtleitende Platte 3, beispielsweise aus Kunststoff, zwei, nämlich auf je einer ihrer Breitseiten 3b, 3c vorgesehene, Anzeigen 4a, 4b hinterleuchten. Die beiden Anzeige 4a, 4b bestehen jeweils aus einer Piktogrammscheibe 5 mit einem Piktogramm, das auf der Piktogrammscheibe 5 beispielsweise durch ein Druckverfahren vorgesehen ist.

Generell ist in den Figuren zu erkennen, dass die rechteckförmige lichtleitende Platte 3 zwischen den beiden einander gegenüberliegenden Breitseiten 3b, 3c eine obere und eine untere Schmalseite 3a, 3d aufweist und im Wesentlichen rechteckförmig ausgebildet ist. Die lichtleitende Platte 3 ragt an ihrer oberen Schmalseite 3a zu dessen Befestigung in ein Außengehäuse 6 der Not- und Sicherheitsleuchte 1 ein, wie in Fig. 1 zu erkennen ist. Das Außengehäuse 6 dient zudem zur Montage der Not- und Sicherheitsleuchte 1.

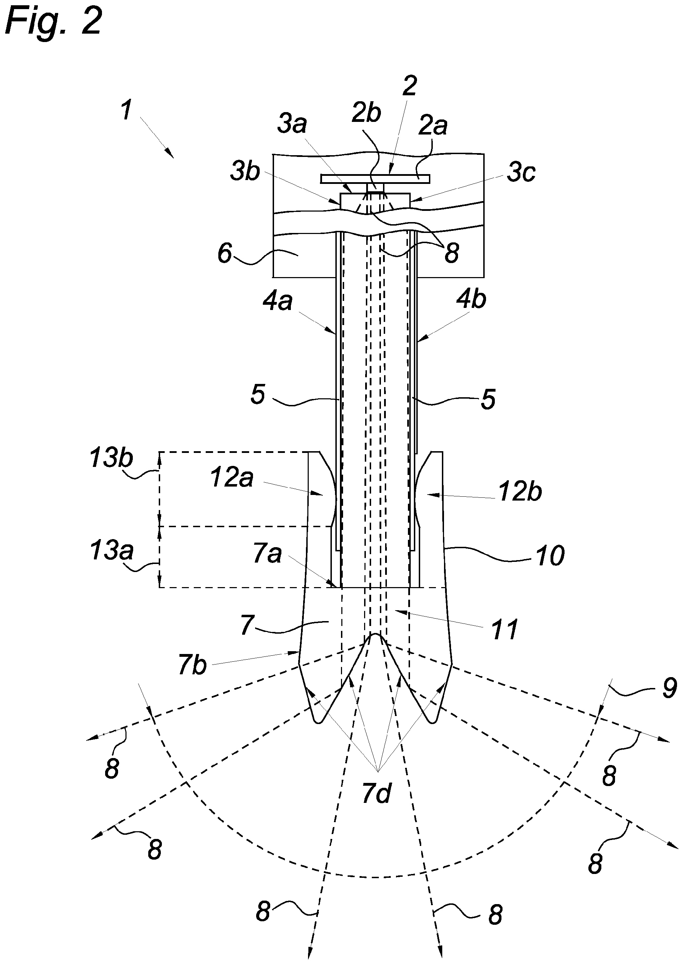

Des Weiteren weist die Not- und Sicherheitsleuchte 1 eine optische Linse 7 auf. Diese Linse 7 ist an der unteren Schmalseite 3d der lichtleitenden Platte 3 angeordnet und dient zur Homogenisierung von aus dieser Schmalseite 3d der lichtleitenden Platte 3 austretendem Licht 8. Damit wird also die Abstrahlcharakteristik 9f der Not- und Sicherheitsleuchte 1 eingestellt, um die gewünschte Umgebungsbeleuchtung zu schaffen - wie in den Fig. 2 zu erkennen.

Erfindungsgemäß wird zur Montage der Linse 7 eine im Querschnitt u-förmige Klammer 10 verwendet. Diese Klammer 10 weist einen Klammersteg 11 und zwei an diesen Klammersteg 11 anschließenden und gleichsinnig ausgerichteten Klammerschenkeln 12a, 12b auf. Die Klammerschenkel 12a, 12b nehmen zwischen sich zumindest die lichtleitende Platte 3 auf deren Breitseiten 3b, 3c klemmend auf. Dies hält die Klammer 10 auf der lichtleitenden Platte 3 und positioniert zudem auch die Linse 7 exakt gegenüber der lichtleitenden Platte 3. Wie in Fig. 2 zu erkennen, ist die Klammer 10 einteilig ausbildet. Damit bildet der Klammersteg 11 die Linse 7 aus. Die Klammer 10 ist damit besonders kostengünstig herstellbar, beispielsweise aus transparentem Kunststoff und/oder durch ein Extrusionsverfahren. Es ist auch vorstellbar, was nicht dargestellt worden ist, dass der Klammersteg 11 die Linse 7 trägt.

Durch den klemmenden Halt der Linse 7 an der lichtleitenden Platte 3 und damit deren Auswechselbarkeit ist eine flexible Anpassung der Umgebungsbeleuchtung handhabungsfreundlich möglich. Das Gleiche gilt auch für Wartungszwecke.

Die Linse 7 ist zudem als TIR-Linse ausgebildet und kann dadurch das aus der lichtleitenden Platte 3 an der unteren Schmalseite 3d austretende Licht 8 besonders gut aufsammeln und für eine hohe Lichtintensität zur Umgebungsbeleuchtung sorgen. Hierzu weist die TIR-Linse eine plane und der Schmalseite 3d zugewandte Lichteintrittsfläche 7a auf und eine totalreflektierende Mantelfläche 7b auf.

Zudem kann in Fig. 2 eine weitere Funktionalität der Klammer 10 erkannt werden. Die beiden Klammerschenkel 12a, 12b ragen nämlich über die jeweilige Anzeige 4a, 4b vor und klemmen damit diese auf die jeweilige Breitseite 3a, 3b der lichtleitenden Platte 3 fest. Damit fixiert die Klammer 10 auch die Anzeigen 4a, 4b gegenüber einem Abheben von der lichtleitenden Platte 3, was eine gleichbleibende Hinterleuchtung sicherstellt und somit standfest vorgegebene Sicherheitsanforderungen erfüllt.

Zudem ist die Klammer 10 in der Konstruktion vereinfacht, in dem diese einstückig aus Kunststoff und transparent ausgebildet ist. Damit bildet auch der Klammersteg 11 die Linse 7 aus.

Die Klammerschenkel 12a, 11b weisen jeweils im Querschnitt innen also an ihren Innenseiten einen ersten an den Klammersteg 11 anschließenden geraden Abschnitt 13a und daran anschließend zweiten konvexen Abschnitt 13b auf. Zudem sind diese einander gegenüberliegenden Klammerschenkel 12a, 11b im Querschnitt, und zwar zur Mittelachse, spiegelsymmetrisch verlaufend, wie in Fig. 2 zu erkennen. Damit lässt sich die Klammer 10 besonders handhabungsfreundlich an der lichtleitenden Platte 3 vorsehen, wobei auch durch die Symmetrie ein Zentrierungseffekt der Klammer 10 gegenüber der lichtleitenden Platte 3 eintritt, der zur exakten Positionierung der Linse 7 beiträgt.

Wie zudem in den Figuren 1 bis 2 zu erkennen, weist die Klammer 10 eine Längsprofilform auf. Damit ist die Klammer 10 beispielsweise durch Extrusion kostengünstig herstellbar.

Verschmutzungen im Spalt zwischen der Klammer 10 und der unteren Schmalseite 3d werden verhindert, in dem an den stirnseitigen Enden der Klammer 10 jeweils eine Endkappe eingeschnappt wird, was die Endkappe dort fest verbindet und damit den Spalt abdichtet. Beispielsweise verrasten die Endkappe in der Klammer 10 mit der Klammer 10 und der lichtleitenden Platte 3, die hierfür je zumindest einen Hinterschnitt aufweisen, in die die Endkappen eingreifen, was nicht näher dargestellt worden ist.

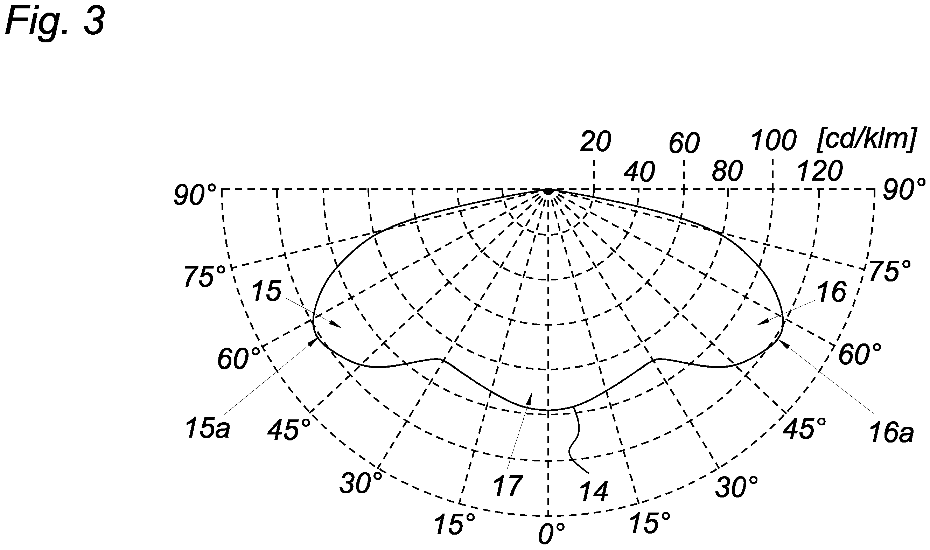

Nach Fig. 3 ist ein Polardiagramm als grafische Darstellung der Lichtstärkeverteilung 14 in der C0/C180-Ebene der Not- und Sicherheitsleuchte 1 dargestellt, also in einer Ebene quer zur Längserstreckung der unteren Schmalseite 3d. Die Lichtintensitätsverteilung 14 bildet aus dem von der Linse 7 abgegebenen Licht 8 und weist zwei Lichtkeulen 15, 16 auf, nämlich je eine Lichtkeule 15, 16 auf einer Halbseite der Lichtstärkeverteilung 14. Die jeweilige Keulenspitze 15a, 16a der Lichtkeule 15, 16 liegen bei einem Winkel im Bereich von 45 bis 75 Grad, nämlich -wie im Ausführungsbeispiel dargestellt- bei ca. 55 Grad und beträgt ca. 120 cd/klm (Candela pro Kilolumen). Die Lichtintensitätsverteilung 14 weist eine symmetrische Batwing-Form auf, was das Licht 8 besonders gleichmäßig verteilt. Dies auch dadurch, weil zwischen den zwei Lichtkeulen 15, 16 ein Zwischenbereich 17 mit im Vergleich zu den Lichtkeulen 15, 16 niedrigerer Lichtintensität zur Homogenisierung der Lichtintensitätsverteilung 14 besteht. Dadurch kann sich die Not- und/oder Sicherheitsleuchte 1 zur Fluchtwegsbeleuchtung besonders eignen, insbesondere wenn der Fluchtweg auf beidseitig zur Not- und Sicherheitsleuchte 1 homogen beleuchtet werden muss.

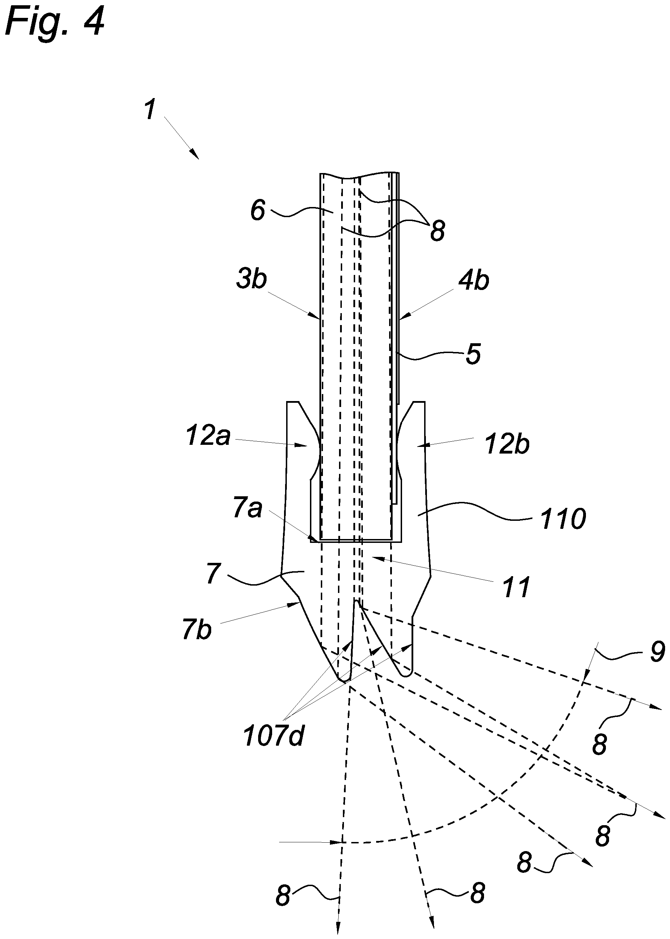

Dies ist bei der Not- und Sicherheitsleuchte 1 nach Fig. 4 nicht notwendig. Hier wird eine homogene Umgebungsbeleuchtung lediglich auf einer Seite quer zur Not- und Sicherheitsleuchte 1 gefordert. Dafür weist die Not- und Sicherheitsleuchte 1 eine in der Form der Linse 7 veränderte Klammer 110 auf, und zwar eine Linse 7 mit einer N-förmig verlaufenden Lichtaustrittsfläche 107d.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Not- und/oder Sicherheitsleuchte mit einer lichtleitenden Platte (3), die zwei einander gegenüberliegende Breitseiten (3b, 3c) und zumindest eine zwischen den Breitseiten (3b, 3c) vorgesehene, insbesondere untere, Schmalseite (3d) aufweist, und mit einer an der zumindest einen Schmalseite (3d) der lichtleitenden Platte (3) angeordneten Linse (7) zum Einstellen einer Abstrahlcharakteristik der Not- und/oder Sicherheitsleuchte zur Umgebungsbeleuchtung mit einem aus der Schmalseite (3d) austretenden Licht (8), **dadurch gekennzeichnet, dass** die Not- und/oder Sicherheitsleuchte (1) eine, insbesondere u-förmige, Klammer (10, 110) mit einem die Linse (7), insbesondere TIR-Linse, aufweisenden oder ausbildenden Klammersteg (11) und mit zumindest zwei an diesen Klammersteg (11) anschließenden und gleichsinnig ausgerichteten Klammerschenkeln (12a, 12b) aufweist, die zwischen einander zumindest die lichtleitende Platte (3) auf deren Breitseiten (3b, 3c) klemmend aufnehmen.

2. Not- und/oder Sicherheitsleuchte nach Anspruch 1, **dadurch gekennzeichnet, dass** eine Lichtintensitätsverteilung (14) des von der Linse (7) abgegebenen Lichts (8), insbesondere in der C0/C180-Ebene, zumindest eine Lichtkeule (15, 16) aufweist, deren Keulenspitze (15a, 16a) bei einem Winkel größer als 0 Grad, insbesondere im Bereich von 45 bis 75 Grad, liegt.

3. Not- und/oder Sicherheitsleuchte nach Anspruch 2, **dadurch gekennzeichnet, dass** die eine, insbesondere symmetrische, Batwing-Form aufweisende Lichtintensitätsverteilung (14), insbesondere in der C0/C180-Ebene, auf jeder Halbseite zumindest eine Lichtkeule (15 oder 16) der zumindest einen Lichtkeule (15, 16) aufweist.

4. Not- und/oder Sicherheitsleuchte nach Anspruch 3, **dadurch gekennzeichnet, dass** die Lichtintensitätsverteilung (14), insbesondere in der C0/C180-Ebene, zwischen den zwei Lichtkeulen (15, 16) einen Zwischenbereich (17) mit einer im Vergleich zu den Lichtkeulen (15, 16) niedrigeren Lichtintensität zur Homogenisierung der Lichtintensitätsverteilung (14) aufweist.

5. Not- und/oder Sicherheitsleuchte nach einem der Ansprüche 1 bis 4, **dadurch gekennzeichnet, dass** die Linse (7) eine plane und der Schmalseite (3d) zugewandte Lichteintrittsfläche (7a) aufweist und/oder, dass die Linse (7) an ihren inneren und/oder äußeren Mantelflächen (7b, 7c) zumindest abschnittsweise wenigstens einen totalreflektierenden Flächenabschnitt aufweist, und/oder dass die Linse (7) eine W-förmig oder N-förmig verlaufende Lichtaustrittsfläche (7d, 107d) aufweist.

6. Not- und/oder Sicherheitsleuchte nach einem der Ansprüche 1 bis 5, **dadurch gekennzeichnet, dass** die Not- und/oder Sicherheitsleuchte (1) zumindest auf einer Breitseite (3b und/oder 3c) der Breitseiten (3b, 3c) der lichtleitenden Platte (3) eine, insbesondere hinterleuchtete, Anzeige (4a, 4b), insbesondere Piktogramm, aufweist.

7. Not- und/oder Sicherheitsleuchte nach Anspruch 6, **dadurch gekennzeichnet, dass** ein Klammerschenkel (12a, 12b) der zumindest zwei Klammerschenkel (12a, 12b) über die Anzeige (4a, 4b) an der Breitseite (3b, 3c) vorragt und an diese Breitseite (3b, 3c) der lichtleitenden Platte (3) klemmt.

8. Not- und/oder Sicherheitsleuchte nach einem der Ansprüche 1 bis 7, **dadurch gekennzeichnet, dass** die Klammerschenkel (12a, 12b) im Querschnitt zumindest abschnittsweise, insbesondere an ihrer Innenseite, konvex und/oder gerade verlaufen.

9. Not- und/oder Sicherheitsleuchte nach einem der Ansprüche 1 bis 8, **dadurch gekennzeichnet, dass** die sich gegenüberliegenden Klammerschenkel (12a, 12b) im Querschnitt spiegelsymmetrisch verlaufen.

10. Not- und/oder Sicherheitsleuchte nach einem der Ansprüche 1 bis 9, **dadurch gekennzeichnet, dass** die Klammer (10, 110) lichtdurchlässig, insbesondere transparent, ist.

11. Not- und/oder Sicherheitsleuchte nach einem der Ansprüche 1 bis 10, **dadurch gekennzeichnet, dass** die, insbesondere einstückige, Klammer (10, 110) aus einem Kunststoffmaterial besteht.

12. Not- und/oder Sicherheitsleuchte nach einem der Ansprüche 1 bis 11, **dadurch gekennzeichnet, dass** die Klammer (10, 110) eine Längsprofilform aufweist, insbesondere aus einem Längsprofil besteht.

13. Not- und/oder Sicherheitsleuchte nach einem der Ansprüche 1 bis 12, **dadurch gekennzeichnet, dass** die Not- und/oder Sicherheitsleuchte (1) Endkappen aufweist, die jeweils an einem der stirnseitigen Enden der Klammer (10, 100) gegebenenfalls zum Verschließen eines Spalts zwischen Klammer (10, 100) und Schmalseite (3d) vorgesehen sind.

14. Not- und/oder Sicherheitsleuchte nach Anspruch 13, **dadurch gekennzeichnet, dass** die Endkappen mit der Klammer (10, 110) fest verbunden sind und/oder dass die Endkappen in der jeweiligen Klammer (10, 110), insbesondere an der lichtleitenden Platte (3), verrastend eingreifen.

15. Not- und/oder Sicherheitsleuchte nach einem der Ansprüche 1 bis 14, **dadurch gekennzeichnet, dass** die Klammer (10, 110) an einem Klammerschenkel (12a, 12b) zumindest eine Haltenase aufweist.

16. Anlage, insbesondere Not- und/oder Sicherheitsbeleuchtungsanlage (1), mit einer Not- und/oder Sicherheitsleuchte (1) nach einem der Ansprüche 1 bis 15.
